(19) Europäisches Patentamt
European Patent Office
Office européen des brevets

(11) **EP 0 975 947 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(21) Anmeldenummer: **99906097.3**

(22) Anmeldetag: **05.01.1999**

(51) Int Cl.$^7$: **G01M 13/04**, G01M 13/02

(86) Internationale Anmeldenummer:
**PCT/EP1999/000007**

(87) Internationale Veröffentlichungsnummer:
**WO 1999/035479 (15.07.1999 Gazette 1999/28)**

(54) **VERFAHREN UND VORRICHTUNG ZUR AUTOMATISIERTEN DIAGNOSE VON DIAGNOSEOBJEKTEN**

METHOD AND APPARATUS FOR AUTOMATED DIAGNOSIS OF DIAGNOSTIC OBJECTS

PROCEDE ET DISPOSTIF DE DIAGNOSTIC AUTOMATISE D'OBJETS SOUMIS A UN DIAGNOSTIC

(84) Benannte Vertragsstaaten:
**DE DK ES FR GB IT**

(30) Priorität: **06.01.1998 DE 19800217**

(43) Veröffentlichungstag der Anmeldung:
**02.02.2000 Patentblatt 2000/05**

(73) Patentinhaber: **GfM Gesellschaft für Maschinendiagnose mbH 12555 Berlin (DE)**

(72) Erfinder: **WIRTH, Rainer D-44629 Herne (DE)**

(56) Entgegenhaltungen:
**DE-A- 4 308 796**      **US-A- 3 677 072**
**US-A- 4 237 454**

## Beschreibung

Die Erfindung betrifft ein Verfahren zur automatisierten Diagnose von Diagnoseobjekten, insbesondere von Antriebssträngen.

Kinematische Effekte an Antriebsstrangen fuhren zu Kraftwirkungen, die in der Maschinenstruktur als Welle forteeleitet werden und an der Maschinenoberfläche als Schwingung erfaßbar sind. Dabei erfolgt die Erfassung durch Umwandlung des mechanischen in ein elektrisches Signal, beispielsweise mittels Beschleunigungsaufnehmern, und Übertragung und gegebenenfalls analoger Vorverarbeitung des analogen elektrischen Signals, Anti-Aliasing-Filterung, Digitalisierung und digitale Zwischenspeicherung. Das digital vorliegende Zeitsignal kann erneut vorverarbeitet werden, zum Beispiel durch Frequenzbandfilterung, Hüllkurvenbildung oder Datenreduktion. Mittels Fourier-Transformation, in der Regel Fast-Fourier-Transformation, erhält man das Spektrum, das Hüllkurvenspektrum und das Maximalwert-Hüllkurvenspektrum des Signals. Die Spektrallinien der den kinematischen Effekten zugehörigen Frequenzen verkörpern dann kinematische Effekte des Diagnoseobjekts sowie Störsignalanteile.

Kann nun eine Spektrallinie oder eine Kombination von Spektrallinien durch ihre Frequenz eindeutig einem kinematischen Effekt zugeordnet werden und kann angenommen werden, daß die schadensartgewichtete Amplitude der Spektrallinie nicht nur Bestandteil einer breitbandigen Anregung, sondern signifikant ist, so liegt der betreffende kinematische Effekt mit großer Wahrscheinlichkeit vor.

Die geschilderte Vorgehensweise ist zum Beispiel in "Einflüsse auf die Zuverlässigkeit von Schwingungsdiaenoseverfahren an Wälziagern" von Rainer Wirth, Dissertation TH Zittau, 1994, beschrieben und wird für Off-Line-Verfahren bereits angewendet.

Die Signifikanzanalyse kommt aus der mathematischen Statistik und ist beispielsweise in "Wahrscheinlichkeitsrechnung und mathematische Statistik", MINÖL Band 17, B.G. Teubner Verlagsgeseilschaft Leipzig, 1988, von Bayer. O.; Hackei, H.: Pieper, V.: Tiedke, J., beschrieben.

Demgegenüber gibt es On-Line-Verfahren, die die Überwachung von Spektren und Hütikurvenspektren verwirklichen, wie beispielsweise angegeben in "Zustandsüberwachung mit InterMAC in KraRwerks-, Bergwerks- und Prozeßanlagen" von Schuehle, R., Becker, E., veröffentlicht in Seeliger, A.: "AKIDA - Aachener Kolloquium für Instandhaltung, Diagnose und Anlagenüberwachung" - Tagungsband des Kolloquiums vom 30. - 31. Mai 1996 in Aachen. Des weiteren ist das Online-Verfahren mit Hilfe der Amplitudenüberwachung von einzelnen Merkmalen realisiert und ebenfalls in der vorgenannten Veröffentlichung beschrieben.

Die Überwachung von Spektren mittels derartiger Online-Verfahren erfordert einen regelmäßigen Datentransfer sowie eine regelmäßige Analyse durch den Experten. Die automatische Amplitudenüberwachung von einzelnen Merkmalen ist lediglich für kontinuierliche Prozesse geeignet. Sobald sich jedoch Veränderungen aufgrund von Belastungs- und Umgebungseinflüssen ergeben, versagen die angewandten Verfahren.

Hinsichtlich des Erfordernisses eines regelmäßigen Datentransfers ist ein Überwachungssystem vorteilhaft, wie es in der US-Patentschrift 4,237,454 beschrieben ist. Bei diesem Überwachungssystem wird mittels eines an einem Überwachungs- bzw. Diagnoseobjekt angebrachten Vibrationssensors einer Datenerfassungseinheit ein das Ausmaß der Vibrationen angebendes analoges Ausgangssignal erzeugt, das einer Auswerteeinrichtung zugeführt wird. In dieser Auswerteinrichtung wird der Crest-Faktor des Ausgangssignals des Vibrationssensors errechnet. Übersteigt der Crest-Faktor einen vorgegebenen Schwellenwert, dann wird von einem Sender in der Datenerfassungseinheit eine Meldung an ein räumlich von der Datenerfassungseinheit angeordnetes Überwachungsterminal gesendet.

Die Aufgabe der Erfindung besteht darin, ein Verfahren anzugeben, daß im Wege der On-line-Datenerfassung für die Ferndiagnose von Zustandsparametern sichere und eindeutig kennzeichnende Merkmale auch unter Belastungsänderungen und Umgebungseinflüssen liefert und die Diagnosezuverlässigkeit erhöht und kostengünstig arbeitet.

Erfindungsgemäß wird die Aufgabe mit den Merkmalen des Anspruchs 1 gelöst. Vorteilhafte Ausgestaltungen der Erfindung sind in den abhängigen Ansprüchen angegeben. Dabei hat es sich als besonders vorteilhaft herausgestellt, dass eine stationäre, automatisch arbeitende Datenerfassungseinheit am Diagnoseobjekt die Signifikanz der gewünschten Merkmalsparameter überwacht, wobei die Irrtumswahrscheinlichkeit für jede Schadensart vorgegeben wird. Übersteigt die Signifikanz einen bestimmten vorgegebenen Wert, d.h. übersteigt die Amplitude der den kinematischen Ereignissen zugehörigen Schwingungskomponenten die Signifikanzschwelle für diese Merkmalsparameter, so erfolgt der signifikanzgesteuerte Datentransfer zum Überwachungsterminal, an dem die übertragenen Daten gespeichert werden und parallel eine Meldung oder Alarmierung hervorgerufen wird.

Anstelle der Schwingbeschleunigung kann ebenso die Schwinggeschwindigkeit oder der Schwingweg als physikalischer Merkmalsparameter überwacht werden. Neben der Gehäuseschwingung sind die Wellenschwingung, die Drehungsgleichförmigkeit oder die Torsionsschwingung und irgendwelche anderen Zustandsparameter messbar.

Nachfolgend soll die Erfindung anhand eines im Blockschaltbild dargestellten Ausführungsbeispiels näher erläutert und anhand eines Programmablaufs beschrieben werden.

Das Blockschaltbild weist ein Diagnoseobjekt 1 auf, das im vorliegenden Fall ein Antriebsstrang sein kann und mit einer Datenerfassungseinheit 2 verbunden ist. Die Datenerfassungseinheit 2 umfasst herkömmliche Sensoren, die räumlich am Diagnoseobjekt 1 angebracht sind. Weiterhin sind für die Sensoren eine übliche Stromversorgung und handelsübliche Filter für die Signalkonditiorderung angeordnet. Darüber hinaus ist als Digitalisierungsvorrichtune der Datenerfassungseinheit 2 jeder von den Sensoren hervorgerufene Signalfolge ein Analog-Digital-Wandler zugeordnet. Die digitalisierten Signale werden in einem zugehörigen Speicher abgelegt, der Bestandteil eines üblichen Rechners ist, der gleichzeitig als Steuereinrichtung arbeitet, in dem auch die Signifikanzanalyse durchgeführt wird. Über eine weiterhin vorgesehene übliche Schnittstelle in der Datenerfassungseinheit 2 wird der Datentransfer 3 für die Kommunikation mit einem Überwachungsterminal 4 verwiklicht.

Der Datenfransfer 3 ist bevorzugterweise über ein gegebenes Telefonfestnetz oder drahtloses Telefonnetz oder Satellitentelefonnetz oder Internet durchfuhrbar.

Im Überwachungsterminal 4 ist ebenfalls eine übliche Schnittstelle für die Kommunikation mit der Datenerfassungseinheit 2 vorgesehen. Das Überwachungsterminal 4 weist im wesentlichen die gleichen Komponenten wie ein üblicher PC-Arbeitsplatz mit Bildschirm und Computer auf, in dem die eingehenden Signale gespeichert und auf dem Bildschirm dargestellt werden. Damit wird ermöglicht, daß alle Meldungen für LIberwachungszwecke darstellbar und für eventuelle Eingriffe verwendbar sind.

Für die Beschreibung eines Beispiels eines Programmablaufs für ein Verfahren zur automatisierten Diagnose ist als einfache Voraussetzung zur eindeutigen Beschreibung der Zusammenhänge notwendig, die erforderlichen Bezeichnungen festzulegen. Es sei x eine an einem Diagnoseobjekt (Komponente eines Antriebsstrangs wie Motor, Getriebe usw.) erfaßte physikalische Größe, beispielsweise

- die Schwingbeschleunigung.

- die Schwinggeschwindigkeit.

- der relative oder absolute Schwingweg,

- das Drehmoment,

- die Winkelgeschwindigkeit oder

- die Hüllkurve einer dieser physikalischen Größen.

Dann sei das Amplitudenspektrum von x spezifiziert durch einen Frequenzkanal $f(i)$ und einen Amplitudenkanal $x(i)$ mit $i = 1,2,..., N$ bzw. $i = \frac{f_t}{f_l}$, wobei $f_t$ die jedem Einzelwert zugehörige Frequenz und $f_l$ die Schrittweite angeben. Als diagnostische Voraussetzung sei für jedes Diagnosemerkmal gegeben und in einer Matrix hinterlegt

- $k$ - Bezeichnung des Diagnosemerkmals
- $\frac{f_{k,th}}{f_l}$ - Ordnung, bezogen auf schnelle Welle
- $\Delta f_{ku\%}$ - untere Toleranzgrenze in Prozent
- $\Delta f_{ko\%}$ - obere Toleranzgrenze in Prozent
- $\Delta i_{kS}$ - Signifikanzbreite in Prozent
- $z_k$ - merkmalspezifische Konstante (ersetzt das a -Fraktil der Signifikanztheorie)
- $alarm$ - legt fest, wie oft die Signifikanzschwelle vor Alarmauslösung überschritten werden darf

In $z_k$ sind die Irrtumswahrscheinlichkeit und die schadensartbezogene Wichtung enthalten. Die für die Diagnose erforderlichen Merkmale $k$ seien durch die theoretische kinematische Frequenz , $f_{k,th}$ und die zugehörige Amplitude $x_{k,th}$ spezifiziert.

Für jedes Merkmal $k$ gilt:

Auf der Grundlage der theoretischen kinematischen Zusammenhänge wird zur Diagnose des Merkmals $k$ die Amplitude höchster Signifikanz herangezogen. Dazu werden eine untere Toleranzgrenze $\Delta f_{ku\%}$ und eine obere Toleranzgrenze $\Delta f_{ko\%}$ verwandt.

Die höchste Signifikanz $S_k = max(S_i)$ für das Merkmal $k$ wird nun gebildet, indem i der Bedingung $\frac{f_{k,th}}{f_l}(1-\Delta f_{ku\%}) \leq i \leq \frac{f_{k,th}}{f_l}(1+\Delta f_{ko\%})$ genügt.

Für jedes $S_i$ gilt dabei:

$$S_i = \frac{x_i}{c_i} = \frac{x_i}{\delta_i z_k + \bar{x}_i}$$

mit

$$\bar{x}_i = \frac{1}{2\Delta i_{kS}} \sum_{j=i-\frac{\Delta i_{kS}}{2}}^{i+\frac{\Delta i_{kS}}{2}} x_j$$

und

$$\delta_i = \sqrt{\frac{1}{2\Delta i_{kS}} \sum_{j=i-\frac{\Delta i_{kS}}{2}}^{i+\frac{\Delta i_{kS}}{2}} (x_j - \bar{x}_i)^2}$$

Folglich gibt $S_i$ die Signifikanz, d.h. das Verhältnis der Amplitude $x_i$ zur gleitenden Signifikanzschwelle $c_i$ an.

Für die praktische Abarbeitung ist die Festlegung einer Matrix erforderlich:

(hier am Beispiel eines Schüsselmühlengetriebes)

| Merkmal | Bemerkung | Ordnung | Startwerte | | | | |
|---|---|---|---|---|---|---|---|
| $k$ | | $\frac{f_{k,th}}{f_{nl}}$ | $\Delta f_{ku\%}$ | $\Delta f_{ko\%}$ | $\Delta i_{kS}$ | $z_k$ | alarm |
| n1 | Drehzahl 1 | 1,0000 | 0,5 | 0,5 | 15 | 2,33 | 3 |
| n2 | Drehzahl 2 | 0,1887 | 0,5 | 0,5 | 15 | 2,33 | 3 |
| n3 | Drehzahl 3 | 0,0229 | 0,5 | 0,5 | 15 | 2,33 | 3 |
| nPlanet | Drehzahl Planetenrad | 0,0531 | 0,5 | 0,5 | 15 | 2,33 | 3 |
| nÜSonne | Drehzahl Überrollung Sonne | 0,4979 | 0,5 | 0,5 | 15 | 2,33 | 3 |
| nÜPlanet | Drehzahl Überrollung Planetenrad | 0,0531 | 0,5 | 0,5 | 15 | 2,33 | 3 |
| nÜHohl | Drehzahl Überrollung Hohlrad | 0,0686 | 0,5 | 0,5 | 15 | 2,33 | 3 |
| z1 | Zahneingriff 1 | 10,0000 | 0,5 | 0,5 | 15 | 2,33 | 3 |
| z2 | Zahneingriff 2 | 2,6529 | 0,5 | 0,5 | 15 | 2,33 | 3 |
| z1-2n1 | Seitenband z1-2n1 | 8,0000 | 0,5 | 0,5 | 15 | 2,33 | 3 |
| z1-n1 | Seitenband z1-n1 | 9,0000 | 0,5 | 0,5 | 15 | 2,33 | 3 |
| z1+n1 | Seitenband z1+n1 | 11,0000 | 0,5 | 0,5 | 15 | 2,33 | 3 |
| z1+2n1 | Seitenband z1+2n1 | 12,0000 | 0,5 | 0,5 | 15 | 2,33 | 3 |
| z1-2n2 | Seitenband z1-2n2 | 9,6226 | 0,5 | 0,5 | 15 | 2,33 | 3 |
| z1-n2 | Seitenband z1-n2 | 9,8113 | 0,5 | 0,5 | 15 | 2,33 | 3 |
| z1+n2 | Seitenband z1+n2 | 10,1887 | 0,5 | 0,5 | 15 | 2,33 | 3 |
| z1+2n2 | Seitenband z1+2n2 | 10,3774 | 0,5 | 0,5 | 15 | 2,33 | 3 |
| z2-2n2 | Seitenband z2-2n2 | 2,2755 | 0,5 | 0,5 | 15 | 2,33 | 3 |
| z2-n2 | Seitenband z2-n2 | 2,4642 | 0,5 | 0,5 | 15 | 2,33 | 3 |
| z2+n2 | Seitenband z2+n2 | 2,8416 | 0,5 | 0,5 | 15 | 2,33 | 3 |

(fortgesetzt)

| Merkmal | Bemerkung | Ordnung $f_{k,th}$ | Startwerte | | | | |
|---|---|---|---|---|---|---|---|
| $k$ | | $f_{nl}$ | $\Delta f_{ku\%}$ | $\Delta f_{ko\%}$ | $\Delta i_{kS}$ | $z_k$ | alarm |
| z2+2n2 | Seitenband z2+2n2 | 3,0303 | 0,5 | 0,5 | 15 | 2,33 | 3 |
| z2-2n3 | Seitenband z2-2n3 | 2,6071 | 0,5 | 0,5 | 15 | 2,33 | 3 |
| z2-n3 | Seitenband z2-n3 | 2,6300 | 0,5 | 0,5 | 15 | 2,33 | 3 |
| z2+n3 | Seitenband z2+n3 | 2,6758 | 0,5 | 0,5 | 15 | 2,33 | 3 |
| z2+2n3 | Scitenband z2+2n3 | 2,6987 | 0,5 | 0,5 | 15 | 2,33 | 3 |
| z2-2nÜSonne | Seitenband z2-2nÜSonne | 1,6580 | 0,5 | 0,5 | 15 | 2,33 | 3 |
| z2-nÜSonne | Seitenband z2-n-ÜSonne | 2,1555 | 0,5 | 0,5 | 15 | 2,33 | 3 |
| z2+nÜSonne | Seitenband z2+nÜSonne | 3,1503 | 0,5 | 0,5 | 15 | 2,33 | 3 |
| z2+2nÜSonne | Seitenband z2+2nÜSonne | 3,6478 | 0,5 | 0,5 | 15 | 2,33 | 3 |
| z2-2nÜPlanet | Seitenband z2-2nÜPlanet | 2,5468 | 0,5 | 0,5 | 15 | 2,33 | 3 |
| z2-nÜPlanet | Seitenband z2-nÜPlanet | 2,5998 | 0,5 | 0,5 | 15 | 2,33 | 3 |
| z2+nÜPlanet | Seitenband z2+nÜPlanet | 2,7060 | 0,5 | 0,5 | 15 | 2,33 | 3 |
| z2+2nÜPlanet | Seitenband z2+2nÜPlanet | 2,7590 | 0,5 | 0,5 | 15 | 2,33 | 3 |
| z2-2nÜHohl | Seitenband z2-2nÜHohl | 2,5157 | 0,5 | 0,5 | 15 | 2,33 | 3 |
| z2-nÜHohl | Seitenband z2-nÜHohl | 2,3343 | 0,5 | 0,5 | 15 | 2,33 | 3 |
| z2+nÜHohl | Seitenband z2+nÜHohl | 2, 7215 | 0,5 | 0,5 | 15 | 2,33 | 3 |
| z2+2nÜHohl | Seitenband z2+2nÜHohl | 2,7901 | 0,5 | 0,5 | 15 | 2,33 | 3 |
| SKF 332347,K | Käfigrotationsfrequenz | 0,4240 | 2,0 | 0,5 | 15 | 2,33 | 3 |
| SKF 332347,WA | Wälzkörperspinfrequenz | 2,9510 | 2,0 | 0,5 | 15 | 2,33 | 3 |
| SKF 332397,W | Wälzkörperüberrollfrequenz | 5,9020 | 2,0 | 0,5 | 15 | 2,33 | 3 |
| SKF 332397,A | Außenringüberrollfrequenz | 9,3300 | 2,0 | 0,5 | 15 | 2,33 | 3 |
| SKF 332347,I | Innenringüberrollfrequenz | 12,6700 | 2,0 | 0,5 | 15 | 2,33 | 3 |
| SKF 22344,K | Käfigrotationsfrequenz | 0,4190 | 2,0 | 0,5 | 15 | 2,33 | 3 |
| SKF 22344,WA | Wälzkörpcrspinfrequenz | 2,9590 | 2,0 | 0,5 | 15 | 2,33 | 3 |
| SKF 22344,W | Wälzkörperüberrollfrequenz | 5,9180 | 2,0 | 0,5 | 15 | 2,33 | 3 |
| SKF 22344,A | Außenringüberrollfrequenz | 7,1230 | 2,0 | 0,5 | 15 | 2,33 | 3 |
| SKF 22344,I | Innenringüberrollfrequenz | 9,8700 | 2,0 | 0,5 | 15 | 2,33 | 3 |
| FAG 22344,K | Käfigrotationsfrequenz | 0,4110 | 2,0 | 0,5 | 15 | 2,33 | 3 |
| FAG 22394,WA | Wälzkörperspinfrequenz | 2,6430 | 2,0 | 0,5 | 15 | 2,33 | 3 |
| FAG 22344,W | Wälzkörperüberrollfrequenz | 5, 2860 | 2,0 | 0,5 | 15 | 2, 33 | 3 |
| FAG 22344,A | Außenringüberrollfrequenz | 6,1620 | 2,0 | 0,5 | 15 | 2,33 | 3 |
| FAG 22344,I | Innenringüberrollfrequenz | 8,8380 | 2,0 | 0,5 | 15 | 2,33 | 3 |
| SKF 32056X,K | Käfigrotationsfrequenz | 0,0853 | 2,0 | 0,5 | 15 | 2,33 | 3 |
| SKF 32056X,WA | Wälzkörperspinfrequenz | 0,9330 | 2,0 | 0,5 | 15 | 2,33 | 3 |

(fortgesetzt)

| Merkmal | Bemerkung | Ordnung $f_{k,th}$ | Startwerte | | | | |
|---|---|---|---|---|---|---|---|
| $k$ | | $f_{nl}$ | $\Delta f_{ku\%}$ | $\Delta f_{ko\%}$ | $\Delta i_{kS}$ | $z_k$ | alarm |
| SKF 32056X,W | Wälzkörperüberrollfrequenz | 1,8660 | 2,0 | 0,5 | 15 | 2,33 | 3 |
| SKF 32056X,A | Außenringüberrollfrequenz | 2,6443 | 2,0 | 0,5 | 15 | 2,33 | 3 |
| SKF 32056X,I | Innenringüberrollfrequenz | 3,2045 | 2,0 | 0,5 | 15 | 2,33 | 3 |
| SKF NU2244,K | Käfigrotationsfrequenz | 0,0830 | 2,0 | 0,5 | 15 | 2,33 | 3 |
| SKF NU2244,WA | Wälzkörperspinfrequenz | 0,7189 | 2,0 | 0,5 | 15 | 2,33 | 3 |
| SKF NU2244,W | Wälzkörperüberrollfrequenz | 1,4378 | 2,0 | 0,5 | 15 | 2,33 | 3 |
| SKF NU2244,A | Außenringüberrollfrequenz | 1,5604 | 2,0 | 0,5 | 15 | .2,33 | 3 |
| SKF NU2244,I | Innenringüberrollfrequenz | 2,0245 | 2,0 | 0,5 | 15 | 2,33 | 3 |
| SKF 23248CC,K | Käfigrotationsfrequenz | 0,0228 | 2,0 | 0,5 | 15 | 2,33 | 3 |
| SKF 23248CC,WA | Wälzkörperspinfrequenz | 0,1802 | 2,0 | 0,5 | 15 | 2,33 | 3 |
| SKF 23248CC,W | Wälzkörperüberrollfrequenz | 0,3604 | 2,0 | 0,5 | 15 | 2,33 | 3 |
| SKF 23248CC,A | Außenringüberrollfrequenz | 0,4333 | 2,0 | 0,5 | 15 | 2,33 | 3 |
| SKF 23248CC,I | Innenringüberrollfrequenz | 0,5749 | 2,0 | 0,5 | 15 | 2,33 | 3 |
| FAG 23248B,K | Käfigrotationsfrequenz | 0,0229 | 2,0 | 0,5 | 15 | 2,33 | 3 |
| FAG 23248B,WA | Wälzkörperspinfrequenz | 0,1824 | 2,0 | 0,5 | 15 | 2,33 | 3 |
| FAG 23248B,W | Wälzkörperüberrollfrequenz | 0,3648 | 2,0 | 0,5 | 15 | 2,33 | 3 |
| FAG 23248B,A | Außenringüberrollfrequenz | 0,4571 | 2,0 | 0,5 | 15 | 2,33 | 3 |
| FAG 23248B,I | Innenringüberrollfrequenz | 0,6040 | 2,0 | 0,5 | 15 | 2,33 | 3 |
| SKF NU10/560,K | Käfigrotationsfrequenz | 0,0103 | 2,0 | 0,5 | 15 | 2,33 | 3 |
| SKF NU10/560,WA | Wälzkörperspinfrequenz | 0,1221 | 2,0 | 0,5 | 15 | 2, 33 | 3 |
| SKF NU10/560,W | Wälzkörperüberrollfrequenz | 0,2442 | 2,0 | 0,5 | 15 | 2,33 | 3 |
| SKF NU10/560,A | Außenringüberrollfrequenz | 0,2905 | 2,0 | 0,5 | 15 | 2,33 | 3 |
| SKF NU10/560,I | Innenringüberrollfrequenz | 0,3499 | 2,0 | 0,5 | 15 | 2,33 | 3 |

Im folgenden wird der schematische Programmablauf im Prinzip gezeigt:

**Start**

1. Schleife: Für alle $x$

   2. Schleife: Für alle $k$ :

      $S_k = 0$

      3. Schleife: Für alle $i$ , solange $\dfrac{f_{k.th}}{f_I}\left(1 - \Delta f_{ku\%}\right) \le i \le \dfrac{f_{k.th}}{f_I}\left(1 + \Delta f_{ko\%}\right)$ erfüllt ist:

$$\overline{x}_i = \frac{1}{2i\Delta f_{kS}} \sum_{j=i\left(1-\frac{\Delta f_{kS}}{2}\right)}^{i\left(1+\frac{\Delta f_{kS}}{2}\right)} x_j$$

$$\delta_i = \sqrt{\frac{1}{2i\Delta f_{kS}} \sum_{j=i\left(1-\frac{\Delta f_{kS}}{2}\right)}^{i\left(1+\frac{\Delta f_{kS}}{2}\right)} \left(x_j - \overline{x}_i\right)^2}$$

$$S_i = \frac{x_i}{c_i} = \frac{x_i}{\delta_i z_k + \overline{x}_i}$$

      wenn $S_k < S_i$ dann sei $S_k = S_i$

      Ende 3. Schleife

   Wenn $S_k > 1$ ist, werden

      das Schwingungsspektrum und alle relevanten Daten gespeichert und

      die Variable *alarm* dekrementiert.

      Wenn *alarm* $= 0$ ist, werden

         der Datentransfer zum Überwachungsterminal durchgeführt, z.B. per Modem,

         eine Meldung zum Überwachungsterminal vorgenommen, z.B. per Fax,

         $z_k := 1.1 \cdot z_k$ gesetzt.

   Ende 2. Schleife

Ende 1. Schleife

**zurück zu Start**

Beispiel anhand eines Turbo-Pascal-Programms:

Zur Simulation und Verifikation wurde ein Turbo-Pascal-Programm verwendet, das die Funktionsweise jedoch für lediglich ein x und ein *k* veranschaulicht. Im Rahmen der Femdiagnose werden die Eingabegrößen $\dfrac{f_{k.th}}{f_{nI}}$, $\Delta f_{ku\%}$, $\Delta f_{ko\%}$, $\Delta i_{kS}$, $z_k$ und *alarm* aus einer frei konfigurierbaren Matrix entnommen, $f_I$ wird gemessen.

```
program signifikanz;

uses crt;

const
novalue = 9.9e+34;

var
o_th,f1,df_u,df_o,z,xq,d,si,s      : real;
i,j,a,b,k,y,di_s,n,alarm           : integer;
dat,dat2                           : text;
datname,datname2                   : string[60];
f,x                                : array [0..4097] of real;

procedure eingabe;
begin
write('f_th/f1 : ');readln(o_th);
write('f1       : ');readln(f1);
write('df_u     : ');readln(df_u);
write('df_o     : ');readln(df_o);
write('di_s     : ');readln(di_s);
write('z        : ');readln(z);
write('datname  : ');readln(datname);
write('datname2 : ');readln(datname2);
write('N        : ');readln(n);
write('Alarm    : ');readln(alarm)
end;


procedure datei;
begin
assign(dat,datname);
reset(dat);
i:=0;
   repeat
      readln(dat,f[i],x[i]);
      i:=i+1
   until i=n;
close(dat);
end;
```

```
procedure sig;

function sum1(anf,en:integer):real;
var sum:real;
begin
    j:=anf;sum:=0;
    while j<=en do
    begin
        sum:=sum+x[j];
        j:=j+1;
    end;
    sum1:=sum;
end;

function sum2(anf,en:integer):real;
var sum:real;
begin
    j:=anf;sum:=0;
    while j<=en do
    begin
        sum:=sum+sqr(x[j]-xq);
        j:=j+1;
    end;
    sum2:=sum;
end;

begin
a:=i-round((di_s-1)/2);
b:=i+round((di_s-1)/2);
xq:=1/(di_s)*sum1(a,b);
d:=sqrt(1/(di_s)*sum2(a,b));
si:=x[i]/(d*z+xq);
end;


procedure smax;

begin
s:=0;
i:=0;
repeat
 if (round(o_th*f1*(1-df_u)/f[1])<=i) and (i<=round(o_th*f1*(1+df_o)/f[1]))
then
    begin
       sig;
       begin
       writeln(dat2,f[i],' ',x[i],' ',si);
       end;
       if si > s then begin s:=si;k:=i end;
       i:=i+1;
     end
    else begin
         writeln(dat2,f[i],' ',x[i],'   ',novalue);
         i:=i+1;
         end;
 until i=(n-1);
 end;

procedure daten_in_ringspeicher;
begin
{legt das Spektrum, k, s und ggf. Referenzdaten im Ringspeicher ab}
end;
```

```
procedure alarm_in_matrix_speichern;
begin
{für die Ferndiagnose werden f_th_/fl, df_u, df_o, di_s, z und alarm aus
einer frei konfigurierbaren Matrix entnommen, fl wird gemessen.
Diese Prozedur realisiert, daß alarm wieder in die Matrix geschrieben wird}
end;

procedure z_in_matrix_speichern;
begin
{für die Ferndiagnose werden f_th_/fl, df_u, df_o, di_s, z und alarm aus
einer frei konfigurierbaren Matrix entnommen, fl wird gemessen.
Diese Prozedur realisiert, daß z wieder in die Matrix geschrieben wird}
end;

procedure daten_an_Überwachungsterminal_uebertragen;
begin
{realisiert die automatische Datenübertragung in die SQL-Datenbank am
Standort des Überwachungsterminals}
end;

procedure experten_alarmieren;
begin
{realisiert die automatische Alarmierung von Personal am Standort des
Überwachungsterminals per Fax, E-Mail usw.}
end;

begin
eingabe;
assign(dat2,datname2);
rewrite(dat2);
   datei;
   smax;
close(dat2);readln;
if s > 1 then
   begin
   daten_in_ringspeicher;
   alarm:=alarm-1;
   alarm_in_matrix_speichern;
   if alarm=0 then
      begin
      daten_an_Standort_des_Überwachungsterminals_uebertragen;
      experten_alarmieren;
      z:=z*1.1;
      z_in_matrix_speichern;
      end
   end
end.
```

Änderung der Signifikanz an einem geschädigten Wälzlager:

Ein Vergleich der Ergebnisse von zwei realen Messungen, vom 02.10.1996 und vom 01.08.1997, ergibt unter Zuhilfenahme der Signifikanzanalyse folgendes:

Bild 1: Hüllkurven- und Signifikanzspektrum der Messung vom 02.10.96

Bild. 2: Hüllkurven- und Signifikanzspektrum der Messung vom 01.08.97

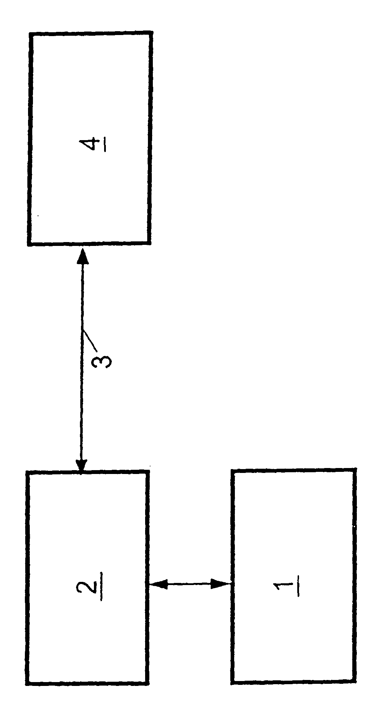

Die Buchstaben in den Signifikanzspektren mit (v.l.n.r.) K (Käfigrotationsfrequenz), n (Drehfrequenz), W (Wälzkörperspinfrequenz oder Wälzkörperüberrollfrequenz), A (Außenringüberrollfrequenz) und I (Innenringüberrollfrequenz) kennzeichnen die pro gesuchter Frequenzlinie errechneten Signifikanzen Die hellblaue oder gestrichelte Linie markiert im Spektrum die Signifikanzschwelle.

Wie aus den Bildern 1 und 2 ersichtlich ist, hat sich die Signifikanz aller Lagerüberrollfrequenzen erhöht. Damit ist der Lagerschaden zuverlässig nachweisbar.

11

**EP 0 975 947 B1**

**Patentansprüche**

1. Verfahren zur automatisierten Diagnose von Diagnoseobjekten, insbesondere von Antriebssträngen, mit einer am Diagnoseobjekt (1) angeordneten stationären, automatisch arbeitenden Datenerfassungseinheit (2) und einem davon räumlich getrennten Überwachungsterminal (4), bei dem

- am Diagnoseobjekt (1) mittels eines Sensors mindestens eine physikalische Größe (x) erfasst und ausgewertet wird und
- bei Überschreiten eines Schwellenwertes eine Meldung von der Datenerfassungseinheit (2) zum Überwachungsterminal (4) gesendet wird,

**dadurch gekennzeichnet, dass**

- aus der mindestens einen physikalischen Größe (x) ein entsprechendes Amplitudenspektrum (x(i), f(i)) gebildet wird,
- mit Hilfe einer Matrix Amplitudenwerte (x(i)) in definierten Frequenzbereichen jeweils einem Diagnosemerkmale (k) zugeordnet werden,
- unter Zugrundelegung einer gleitenden Signifikanzschwelle (ci) für jedes Diagnosemerkmal (k) jeweils das Maximum des Verhältnisses der zugeordneten Amplitudenwerte (x(i)) zu der gleitenden Signifikanzschwelle (ci) unter Gewinnung jeweils einer Signifikanz (K, n, W, A, I) berechnet wird und
- die Meldung von der Datenerfassungseinheit (2) zum Überwachungsterminal (4) gegeben wird, wenn mindestens eine Signifikanz (K, n, W, A, I) oberhalb eines vorgegebenen Signifikanzschwellenwertes liegt.

2. Verfahren nach Anspruch 1, **dadurch gekennzeichnet, dass**

- die Signifikanzen (K, n, W, A, I) der spezifizierten Diagnosemerkmale (k) einer Messung mit den entsprechenden Signifikanzen (Si) einer vorangegangenen Messung verglichen werden.

3. Verfahren nach Anspruch 1 oder 2,
**dadurch gekennzeichnet, dass**

- bei harmonischen Anregungen des Sensors sein Ausgangssignal direkt als das Signal verwendet wird, aus dem das Amplitudenspektrum gebildet wird.

4. Verfahren nach Anspruch 1 oder 2,
**dadurch gekennzeichnet, dass**

- bei stoßimpulsförmigen Anregungen des Sensors das hochpassgefilterte Hüllenkurvenspektrum seines Ausgangssignals als das Signal verwendet wird, aus dem das Amplitudenspektrum gebildet wird.

5. Verfahren nach Anspruch 1 oder 2,
**dadurch gekennzeichnet, dass**

- bei diskontinuierlich auftretenden determinierten Stoßanregungen das Maximalwert-Hüllkurvenspektrum des Ausgangssignals des Sensors als das Signal verwendet wird, aus dem das Amplitudenspektrum gebildet wird.

6. Verfahren nach einem der vorangehenden Ansprüche, **dadurch gekennzeichnet, dass**

- mit dem Sensor die Schwingbeschleunigung, die Schwinggeschwindigkeit , der relative oder der absolute Schwingweg oder das Drehmoment erfasst wird.

7. Anordnung zur automatisierten Diagnose von Diagnoseobjekten, insbesondere von Antriebssträngen, mit einer am Diagnoseobjekt (1) angeordneten stationären, automatisch arbeitenden Datenerfassungseinheit (2) und einem davon räumlich getrennten Überwachungsterminal (4), bei der

- am Diagnoseobjekt (1) ein Sensor angebracht ist, der mindestens eine physikalische Größe (x) erfasst und auswertet,
- dem Sensor eine Datenerfassungseinheit nachgeordnet ist und

- die Datenerfassungseinheit zur Übertragung von Meldungen zum Übervvachungsterminal (4) einen Signalausgang aufinreist, über den bei Überschreiten eines Schwellenwertes eine Meldung gesendet wird,

**dadurch gekennzeichnet, dass**

- dem Sensor ein Analog-Digital-Wandler nachgeordnet ist, dessen digitale Ausgangssignale in einem Speicher abgelegt werden, und
- der Speicher Bestandteil einer Datenerfassungseinheit in Form eines üblichen Rechners ist, in dem
- aus der mindestens einen physikalischen Größe ein entsprechendes Amplitudenspektrum gebildet wird,
- mit Hilfe einer Matrix Amplitudenwerte (x(i)) in definierten Frequenzbereichen jeweils einem Diagnosemerkmal (k) zugeordnet werden,
- unter Zugrundelegung einer gleitenden Signifikanzschwelle für jedes Diagnosemerkmal (k) jeweils das Maximum des Verhältnisses der zugeordneten Amplitudenwerte (x(i)) zu der gleitenden Signifikanzschwelle (ci) unter Gewinnung jeweils einer Signifikanz (K, n, W, A, I) berechnet wird und von dem
- die Meldung zum Überwachungsterminal (4) gegeben wird, wenn mindestens eine Signifikanz (K, n, W, A, I) oberhalb eines vorgegebenen Signifikanzschwellenwertes liegt.

## Claims

1. Method for automated diagnosis of diagnostic objects, in particular of drive trains, having a stationary, automatically operating data acquisition unit (2) arranged on the diagnostic object (1), and a monitoring terminal (4) spatially separated therefrom, in the case of which

   - at least one physical variable (x) is detected on the diagnostic object (1) by means of a sensor and evaluated, and
   - upon overshooting of a threshold value a message is sent from the data acquisition unit (2) to the monitoring terminal (4),

   **characterized in that**

   - a corresponding amplitude spectrum (x(i),f(i)) is formed from the at least one physical variable (x),
   - amplitude values (x(i)) in defined frequency ranges are respectively assigned to a diagnostic feature (k) with the aid of a matrix,
   - on the basis of a sliding significance threshold (ci) for each diagnostic feature (k) the maximum of the ratio of the assigned amplitude values (x(i)) to the sliding significance threshold (ci) is calculated in each case, the result respectively being a significance (K, n, W, A, I), and
   - the message from the data acquisition unit (2) is passed to the monitoring terminal (4) when at least one significance (K, n, W, A, I) is above a prescribed significance threshold value.

2. Method according to Claim 1, **characterized in that**

   - the significances (K, n, W, A, I) of the specified diagnostic features (k) of a measurement are compared with the corresponding significances (Si) of a preceding measurement.

3. Method according to Claim 1 or 2, **characterized in that**

   - upon harmonic excitations of the sensor its output signal is used directly as the signal from which the amplitude spectrum is formed.

4. Method according to Claim 1 or 2, **characterized in that**

   - upon shock pulse excitations of the sensor the high-pass-filtered envelope spectrum of its output signal is used as the signal from which the amplitude spectrum is formed.

5. Method according to Claim 1 or 2, **characterized in that**

   - upon discontinuously occurring determined shock excitations the maximum value envelope spectrum of the output signal of the sensor is used as the signal from which the amplitude spectrum is formed.

6. Method according to one of the preceding claims,
   **characterized in that**

   - the sensor is used to detect the vibration acceleration, the vibration speed, the relative or the absolute vibration displacement or the torque.

7. Arrangement for automated diagnosis of diagnostic objects, in particular of drive trains, having a stationary, automatically operating data acquisition unit (2) arranged on the diagnostic object (1), and a monitoring terminal (4) spatially separated therefrom, in the case of which

   - a sensor is fitted on the diagnostic object (1), by means of which sensor at least one physical variable (x) is detected and evaluated,
   - a data acquisition unit is arranged downstream of the sensor, and
   - for the purpose of transmitting messages to the monitoring terminal (4) the data acquisition unit has a signal output via which a message is sent upon overshooting of a threshold value,

   **characterized in that**

   - an analogue-to-digital converter whose digital output signals are stored in a memory is arranged downstream of the sensor, and
   - the memory is a component of a data acquisition unit in the form of a customary computer in which
   - a corresponding amplitude spectrum is formed from the at least one physical variable,
   - amplitude values (x(i)) in defined frequency ranges are respectively assigned to a diagnostic feature (k) with the aid of a matrix,
   - on the basis of a sliding significance threshold for each diagnostic feature (k) the maximum of the ratio of the assigned amplitude values (x(i)) to the sliding significance threshold (ci) is calculated in each case, the result respectively being a significance (K, n, W, A, I), and by which
   - the message is passed to the monitoring terminal (4) when at least one significance (K,n,W,A,I) is above a prescribed significance threshold value.

**Revendications**

1. Procédé de diagnostic automatisé d'objets à diagnostiquer, notamment de chaînes cinématiques, avec une unité d'acquisition de données (2) stationnaire, installée sur l'objet à diagnostiquer (1) et travaillant automatiquement, et avec un terminal de contrôle (4) séparé de celle-ci, dans lequel

   - sur l'objet à diagnostiquer (1), on détecte au moyen d'un capteur au moins une grandeur physique (x) et on l'évalue, et
   - lors du dépassement d'une valeur de seuil, on envoie un message de l'unité d'acquisition de données (2) au terminal de contrôle (4),

     **caractérisé par le fait que**

   - à partir de la ou des grandeurs physiques (x), on forme un spectre d'amplitude (x (i), f (i)) correspondant,
   - à l'aide d'une matrice, on associe des valeurs d'amplitude (x (i)) dans des plages de fréquences définies à chaque fois à une caractéristique de diagnostic (k),
   - en se basant sur un seuil de significativité glissant (ci) pour chaque caractéristique de diagnostic (k), on calcule à chaque fois le maximum du rapport des valeurs d'amplitude associées (x (i)) au seuil de significativité glissant (ci) en obtenant à chaque fois une significativité (K, n, W, A, I), et
   - on envoie le message de l'unité d'acquisition de données (2) au terminal de contrôle (4) si au moins une significativité (K, n, W, A, I) se trouve au-dessus d'une valeur de seuil de significativité prescrite.

2. Procédé selon la revendication 1, **caractérisé par le fait qu'**on compare les significativités (K, n, W, A, I) des caractéristiques de diagnostic spécifiées (k) d'une mesure aux significativités correspondantes (Si) d'une mesure précédente.

3. Procédé selon la revendication 1 ou 2, **caractérisé par le fait que**, en présence d'excitations harmoniques du capteur, on utilise son signal de sortie directement comme le signal à partir duquel le spectre d'amplitude est formé.

4. Procédé selon la revendication 1 ou 2, **caractérisé par le fait que**, en présence d'excitations en forme d'impulsions d'à-coup du capteur, on utilise le spectre d'enveloppante, après filtrage passe-haut, de son signal de sortie comme le signal à partir duquel le spectre d'amplitude est formé.

5. Procédé selon la revendication 1 ou 2, **caractérisé par le fait que**, en présence d'excitations d'à-coup déterminés apparaissant de façon discontinue, on utilise le spectre d'enveloppante à valeurs maximales du signal de sortie du capteur comme le signal à partir duquel le spectre d'amplitude est formé.

6. Procédé selon l'une des revendications précédentes, **caractérisé par le fait que**, avec le capteur, on détecte l'accélération d'oscillation, la vitesse d'oscillation, la course d'oscillation relative ou la course d'oscillation relative ou le couple.

7. Dispositif de diagnostic automatisé d'objets à diagnostiquer, notamment de chaînes cinématiques, avec une unité d'acquisition de données (2) stationnaire, installée sur l'objzt à diagnostiquer (1) et travaillant automatiquement, et avec un terminal de contrôle (4) séparé de celle-ci, dans lequel

- un capteur qui détecte au moins une grandeur physique (x) et l'évalue est installé sur l'objet à diagnostiquer (1),
- une unité d'acquisition de données est placée du côté aval du capteur, et
- pour la transmission de messages au terminal de contrôle (4), l'unité d'acquisition de données comporte une sortie de signal par l'intermédiaire de laquelle un message est envoyé lors du dépassement d'une valeur de seuil,

  **caractérisé par le fait que**

- un convertisseur analogique-numérique dont les signaux de sortie analogiques sont enregistrés dans une mémoire est placé du côté aval du capteur, et
- la mémoire fait partie d'une unité d'acquisition de données sous la forme d'un ordinateur classique dans lequel
- un spectre d'amplitude correspondant est formé à partir de la ou des grandeurs physiques,
- à l'aide d'une matrice, des valeurs d'amplitude ($x(i)$) dans des plages de fréquences définies sont associées à chaque fois à une caractéristique de diagnostic (k),
- en se basant sur un seuil de significativité glissant pour chaque caractéristique de diagnostic (k), le maximum du rapport des valeurs d'amplitude associées ($x(i)$) au seuil de significativité glissant ($c_i$) est calculé en obtenant à chaque fois une significativité (K, n, W, A, I), et
- le message est envoyé au terminal de contrôle (4) si au moins une significativité (K, n, W, A, I) se trouve au-dessus d'une valeur de seuil de significativité prescrite.